# EUROPÄISCHE PATENTANMELDUNG

(11) **EP 2 990 644 A1**
(43) Veröffentlichungstag der Anmeldung: **02.03.2016**
(21) Anmeldenummer: 14182831.9
(22) Anmeldetag: 29.08.2014
(51) Int. Cl.: F03D 13/00

(54) **Windkraftanlage**

(71) Anmelder: Siemens Aktiengesellschaft, 80333 München (DE)
(72) Erfinder: Deicke, Matthias, 31311 Uetze / Schwüblingsen (DE)

(57) **Zusammenfassung**

Die Erfindung betrifft eine Windkraftanlage (1,15,20,25) mit einem Generator (11), der ein mit einem Kühlfluid betriebenes Generatorkühlsystem (12,16,21,26) aufweist, und einem Getriebe (10), das mit einem eine Rückkühleinheit (14,19,24,30) aufweisenden und mit einem Kühlfluid betriebenen Getriebekühlsystem (13,18,23,29) versehen ist, wobei die Rückkühleinheit (14,19,24,30) des Getriebekühlsystems (13,18,23,29) derart ausgebildet und angeordnet ist, dass sie während des bestimmungsgemäßen Betriebs der Windkraftanlage (1,15,20,25) thermische Energie von dem Kühlfluid des Getriebekühlsystems (13,18,23,29) an im Innern des Generators (11) vorhandene Luft oder an das Kühlfluid des Generatorkühlsystems (12,16,21,26) überträgt.

## Beschreibung

Die vorliegende Erfindung betrifft eine Windkraftanlage mit einem Generator, der ein mit einem Kühlfluid betriebenes Generatorkühlsystem aufweist, und einem Getriebe, das mit einem eine Rückkühleinheit aufweisenden und mit einem Kühlfluid betriebenen Getriebekühlsystem versehen ist.

Derartige Windkraftanlagen sind im Stand der Technik in unterschiedlichsten Ausgestaltungen bekannt. Sie umfassen als Hauptbestandteile normalerweise einen Turm, eine drehbar am oberen Ende des Turms befestigte Trägerplattform und einen auf der Trägerplattform angeordneten Antriebsstrang. Der Antriebsstrang umfasst einen vom Wind angetriebenen Rotor, der an einer an einem Lagerbock gelagerten Rotorwelle befestigt ist. Die Rotorwelle ist über mindestens ein Verbindungselement mit einer Getriebeeingangswelle verbunden. Die Ausgangswelle des Getriebes ist mit einem Generator verbunden, genauer gesagt mit einem in einem Generatorgehäuse angeordneten Generatorläufer. Der Generator ist wiederum an einen Frequenzumrichter angeschlossen, der zur Steuerung des Generators und zur Einspeisung der vom Generator erzeugten Energie in ein Stromnetz ausgelegt ist.

Während des Betriebs einer Windkraftanlage wird der Windströmung durch den Rotor Energie entnommen, wodurch der Rotor drehend angetrieben wird. Die Drehbewegung des Rotors wird über die Rotorwelle an das Getriebe übertragen, das zur Erhöhung der Drehzahl dient. Die Ausgangswelle des Getriebes treibt wiederum den Generator an, der die mechanische Energie in elektrische Energie umwandelt, die dann über den Frequenzumrichter in ein Stromnetz eingespeist wird.

Zur Kühlung des Generators und des Getriebes umfassen herkömmliche Windkraftanlagen normalerweise getrennt voneinander ein Generatorkühlsystem und ein Getriebekühlsystem. Das Generatorkühlsystem wird meist mit Luft als Kühlfluid betrieben und ist mit einem Luft-Luft-Wärmetauscher versehen, der derart ausgebildet ist, dass er während des bestimmungsgemäßen Betriebs der Windkraftanlage thermische Energie von der im Inneren des Generators vorhandene Luft an das Kühlfluid des Generatorkühlsystems überträgt. Als Kühlfluid für das Getriebekühlsystem wird meist Öl eingesetzt, das dem Getriebe während des bestimmungsgemäßen Betriebs der Windkraftanlage thermische Energie entzieht. Die aufgenommene Energie wird dem Öl anschließend in einer Rückkühleinheit des Getriebekühlsystems durch ein Rückkühlmedium wieder entzogen, woraufhin das Öl zurück zum Getriebe geleitet wird. Ein Nachteil derart aufgebauter Windkraftanlagen besteht darin, dass ihr Aufbau komplex und kostspielig ist.

Ausgehend von diesem Stand der Technik ist es eine Aufgabe der vorliegenden Erfindung, eine Windkraftanlage der eingangs genannten Art mit alternativem, einfachen und preiswerten Aufbau zu schaffen.

Zur Lösung dieser Aufgabe schafft die vorliegende Erfindung eine Windkraftanlage der eingangs genannten Art, die dadurch gekennzeichnet ist, dass die Rückkühleinheit des Getriebekühlsystems derart ausgebildet und angeordnet ist, dass sie während des bestimmungsgemäßen Betriebs der Windkraftanlage thermische Energie von dem Kühlfluid des Getriebekühlsystems an im Innern des Generators vorhandene Luft oder an das Kühlfluid des Generatorkühlsystems überträgt. Mit anderen Worten wird als Rückkühlmedium für das Kühlfluid des Getriebekühlsystems die Generatorinnenluft oder das Kühlfluid des Generatorkühlsystems verwendet. Somit wird die Rückkühleinheit des Getriebekühlsystems mit dem Generator bzw. dem Generatorkühlsystem gekoppelt, was zu einer Kosten-, Bauteil- und Volumenreduktion führt. Darüber hinaus kann Energie für die Rückkühlung des Kühlfluids des Getriebekühlsystems eingespart werden.

Gemäß einer Ausgestaltung der vorliegenden Erfindung ist das Kühlfluid des Generatorkühlsystems Luft und das Kühlfluid des Getriebekühlsystems Öl, wobei als Rückkühleinheit des Getriebekühlsystems ein Luft-Öl-Wärmetauscher in das Generatorkühlsystem integriert ist, der derart ausgebildet und angeordnet ist, dass er während des bestimmungsgemäßen Betriebs der Windkraftanlage thermische Energie von dem Kühlfluid des Getriebekühlsystems an das Kühlfluid des Generatorkühlsystems überträgt. Bei dieser Ausgestaltung wird also das Öl des Getriebekühlsystems direkt über die Luft des Generatorkühlsystems rückgekühlt.

Gemäß einer weiteren Ausgestaltung der vorliegenden Erfindung ist das Kühlfluid des Generatorkühlsystems Luft und das Kühlfluid des Getriebekühlsystems Öl, wobei das Generatorkühlsystem einen Luft-Luft-Wärmetauscher aufweist, der derart ausgebildet und angeordnet ist, dass er während des bestimmungsgemäßen Betriebs der Windkraftanlage thermische Energie von der im Innern des Generators vorhandenen Luft an das Kühlfluid des Generatorkühlsystems überträgt, und wobei als Rückkühleinheit des Getriebekühlsystems ein Luft-Öl-Wärmetauscher in den Generator integriert ist, der derart ausgebildet und angeordnet ist, dass er während des bestimmungsgemäßen Betriebs der Windkraftanlage thermische Energie von dem Kühlfluid des Getriebekühlsystems an die durch den Luft-Luft-Wärmetauscher gekühlte Innenluft des Generators überträgt. Mit anderen Worten wird bei dieser Ausgestaltung das Öl des Getriebekühlsystems nicht direkt durch die Luft des Generatorkühlsystems rückgekühlt, sondern indirekt durch die im Innenraum des Generators vorhandene Luft, der über das Generatorkühlsystem Wärme entzogen wird.

Gemäß einer alternativen Ausgestaltung der erfindungsgemäßen Windkraftanlage ist das Kühlfluid des Getriebekühlsystems Öl und das Kühlfluid des Generatorkühlsystems Wasser, wobei als Rückkühleinheit des Getriebekühlsystems ein Wasser-Öl-Wärmetauscher in das Generatorkühlsystem integriert ist, der derart ausgebildet und angeordnet ist, dass er während des bestimmungsgemäßen Betriebs der Windkraftanlage thermische Energie von dem Kühlfluid des Getriebes an das Kühlfluid des Generators überträgt. Entsprechend kühlt bei dieser Ausgestaltung das Wasser des Generatorkühlsystems direkt das Öl des Getriebekühlsystems.

Gemäß noch einer weiteren Ausgestaltung der vorliegenden Erfindung ist das Kühlfluid des Generatorkühlsystems Wasser und das Kühlfluid des Getriebekühlsystems Öl, wobei das Generatorkühlsystem einen Wasser-Luft-Wärmetauscher aufweist, der derart ausgebildet und angeordnet ist, dass er während des bestimmungsgemäßen Betriebs der Windkraftanlage thermische Energie von der im Innern des Generators vorhandenen Luft auf das Kühlfluid des Generatorkühlsystems überträgt, und wobei als Rückkühleinheit des Getriebekühlsystems ein Luft-Öl-Wärmetauscher in den Generator integriert ist, der derart ausgebildet und angeordnet ist, dass er während des bestimmungsgemäßen Betriebs der Windkraftanlage thermische Energie von dem Kühlfluid des Getriebekühlsystems an die durch den Wasser-Luft-Wärmetauscher gekühlte Innenluft des Generators überträgt. Mit anderen Worten wird das Öl des Getriebekühlsystems über die über das Wasser des Generatorkühlsystems gekühlte Luft im Innenraum des Generators rückgekühlt, wodurch das Getriebekühlsystem und das Generatorkühlsystem indirekt thermisch miteinander gekoppelt sind.

Weitere Merkmale und Vorteile der vorliegenden Erfindung werden anhand der nachfolgenden Beschreibung von Windkraftanlagen gemäß Ausführungsformen der vorliegenden Erfindung unter Bezugnahme auf die beiliegende Zeichnung deutlich. Darin ist
- FIG 1: eine schematische Darstellung einer Windkraftanlage gemäß einer ersten Ausführungsform der vorliegenden Erfindung;
- FIG 2: eine schematische Darstellung einer Windkraftanlage gemäß einer zweiten Ausführungsform der vorliegenden Erfindung;
- FIG 3: eine schematische Darstellung einer Windkraftanlage gemäß einer dritten Ausführungsform der vorliegenden Erfindung; und
- FIG 4: eine schematische Darstellung einer Windkraftanlage gemäß einer vierten Ausführungsform der vorliegenden Erfindung.

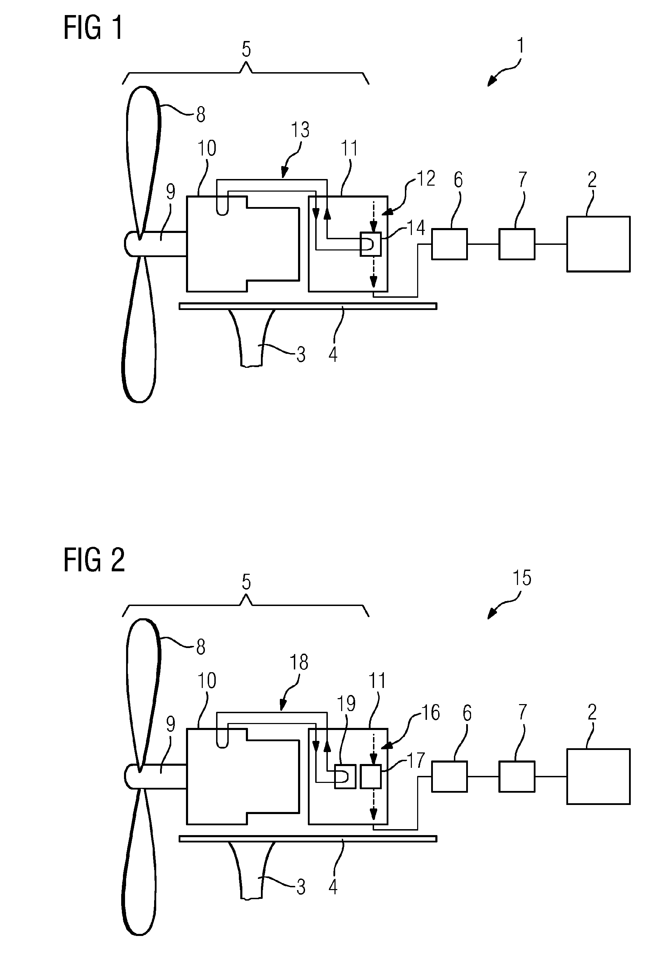

Figur 1 zeigt eine Windkraftanlage 1, die an ein Versorgungsnetz 2 angeschlossen ist. Die Windkraftanlage 1 umfasst als Hauptbestandteile einen Turm 3, eine drehbar am oberen Ende des Turms 3 befestigte Trägerplattform 4, einen auf der Trägerplattform 4 angeordneten Antriebsstrang 5 und einen Frequenzumrichter 6, der meist ebenfalls auf der Trägerplattform 4 positioniert und über einen Transformator 7 an das Versorgungsnetz 2 angeschlossen ist. Der Antriebsstrang 5 weist einen vom Wind angetriebenen Rotor 8 auf, der an einer an einem Lagerbock gelagerten Rotorwelle 9 befestigt ist. Die Rotorwelle 9 ist in ein Getriebe 10 geführt, dessen Ausgangswelle mit einem Generatorläufer eines Generators 11 verbunden ist. Der Generator 11 ist wiederum an den Frequenzumrichter 6 angeschlossen, der zur Steuerung des Generators 11 und zur Einspeisung der vom Generator 11 erzeugten Energie in das Stromnetz 2 ausgelegt ist.

Der Generator 11 umfasst ein Generatorkühlsystem 12, das mit Luft als Kühlfluid durchzuggekühlt wird. Mit anderen Worten wird die im Inneren des Generators 11 vorhandene Luft durch das den Generator 11 durchströmende Kühlfluid des Generatorkühlsystems 12 gebildet und entsprechend ständig ausgetauscht. Das Getriebe 10 weist ein Getriebekühlsystem 13 mit einer Rückkühleinheit 14 auf und wird mit Öl als Kühlfluid betrieben. Bei der Rückkühleinheit 14 handelt es sich vorliegend um einen Luft-Öl-Wärmetauscher, der sowohl an das Generatorkühlsystem 12 als auch an das Getriebekühlsystem 13 angeschlossen ist.

Während des Betriebs wird der Generator 11 durch die das Generatorkühlsystem 12 durchströmende Luft gekühlt, und das Getriebe 10 wird durch das Öl gekühlt, das durch das Generatorkühlsystem 12 geleitet wird. Das durch das Getriebe 10 erwärmte Öl wird der Rückkühleinheit 14 zugeführt, in der es die aufgenommene thermische Energie an die Luft des Generatorkühlsystems 12 abgibt, woraufhin das abgekühlte Öl wieder zum Getriebe 10 geleitet wird.

Der Aufbau der in Figur 1 dargestellten Windkraftanlage 1 ist insbesondere dahingehend von Vorteil, dass durch die Integration der Rückkühleinheit 14 des Getriebekühlsystems 13 in das Generatorkühlsystem 12 Bauteile und auch Kosten eingespart werden können. Ferner ist die von dem Generatorkühlsystem 12 bereitgestellte Kühlleistung drehzahlabhängig und damit leistungsabhängig, was dazu führt, dass auch die Kühlung des Getriebes automatisch leistungsabhängig erfolgt. Vor diesem Hintergrund kann auf zusätzliche Steuereinrichtungen zur leistungsabhängigen Steuerung des Getriebekühlsystems 13 verzichtet werden. Im Ergebnis wird ein einfacher und preiswerter Aufbau der Windkraftanlage 1 erzielt.

Es sei darauf hingewiesen, dass der in Figur 1 dargestellte Generator 11 anstelle einer Durchzugkühlung auch mit einer geschlossenen Kühlung versehen sein kann, bei der die im Inneren des Generators 11 vorhandene Luft und das Kühlfluid des Generatorkühlsystems 12 voneinander getrennt sind. Bei einer solchen geschlossenen Kühlung wird die Innenluft des Generators 11 durch das Kühlfluid des Generatorkühlsystems 12 gekühlt, wozu in das Generatorkühlsystem 12 stromabwärts oder stromaufwärts der Rückkühleinheit 14 des Getriebekühlsystems 13 erfindungsgemäß ein Luft-Luft-Wärmetauscher integriert ist, der in Figur 1 jedoch nicht dargestellt ist.

Figur 2 zeigt eine Windkraftanlage 15 gemäß einer zweiten Ausführungsform der vorliegenden Erfindung, die in wesentlichen Teilen der in Figur 1 dargestellten Windkraftanlage 1 entspricht, weshalb gleiche Bauteile mit gleichen Bezugsziffern versehen sind und nicht erneut beschrieben werden. Die Windkraftanlage 15 umfasst ein Generatorkühlsystem 16, das mit Luft als Kühlfluid betrieben wird und einen Luft-Luft-Wärmetauscher 17 aufweist, der derart ausgebildet und angeordnet ist, dass er während des bestimmungsgemäßen Betriebs der Windkraftanlage 15 thermische Energie von der im Inneren des Generators 11 vorhandenen Luft an das Kühlfluid des Generatorkühlsystems 16 überträgt. Ein Getriebekühlsystem 18 der Windkraftanlage 15 wird mit Öl als Kühlfluid betrieben und umfasst eine Rückkühleinheit 19, bei der es sich vorliegend um einen Luft-Öl-Wärmetauscher handelt, der derart ausgebildet und angeordnet ist, dass er während des bestimmungsgemäßen Betriebs der Windkraftanlage 15 thermische Energie von dem Öl des Getriebekühlsystems 18 an die durch den Luft-Luft-Wärmetauscher 17 des Generatorkühlsystems 16 gekühlte Innenluft des Generators 11 überträgt. Entsprechend ist die Rückkühleinheit 19 des Getriebekühlsystems 18 analog zur ersten Ausführungsform in das Generatorkühlsystem 16 integriert, wodurch die zuvor beschriebenen Vorteile erzielt werden.

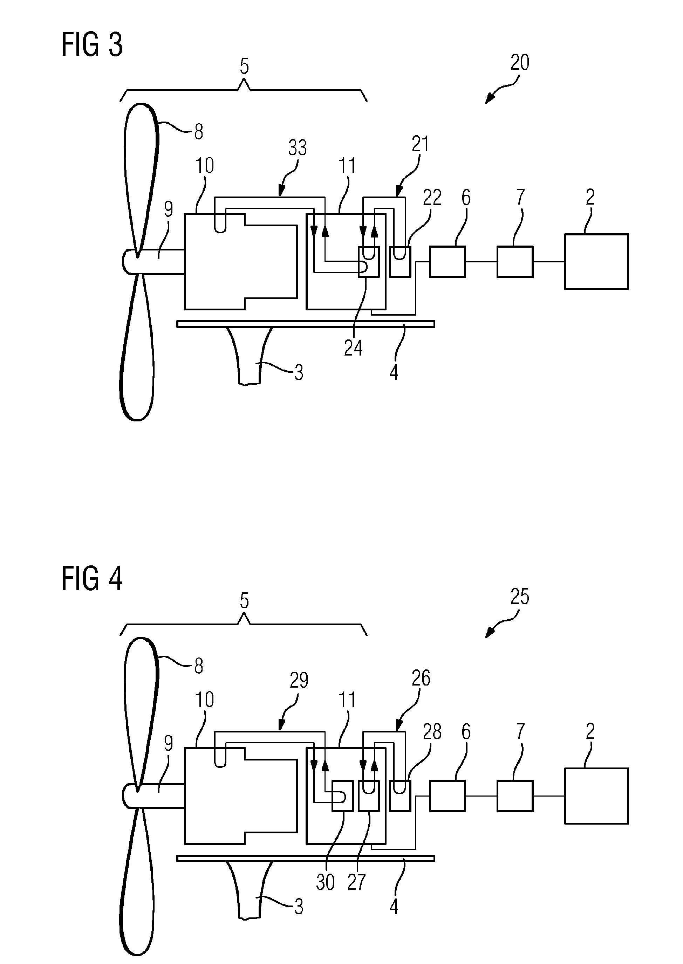

Figur 3 zeigt eine Windkraftanlage 20 gemäß einer dritten Ausführungsform der vorliegenden Erfindung, die in wesentlichen Teilen der in Figur 1 dargestellten Windkraftanlage 1 entspricht, weshalb gleiche Bauteile mit gleichen Bezugsziffern versehen sind und nicht erneut beschrieben werden. Die Windkraftanlage 20 umfasst ein Generatorkühlsystem 21, das Wasser als Kühlfluid verwendet und mit einer Rückkühleinheit 22 versehen ist, die Wärme zumindest teilweise an die Umgebungsluft abgibt. Das Getriebekühlsystem 23 der Windkraftanlage 20 wird mit Öl als Kühlfluid betrieben und umfasst eine in den Generator 11 integrierte Rückkühleinheit 24. Die Rückkühleinheit 24 ist als Wasser-Öl-Wärmetauscher ausgeführt, der sowohl von dem Kühlfluid des Generatorkühlsystems 21 als auch von dem Kühlfluid des Getriebekühlsystems 23 durchströmt wird, so dass zwischen diesen Medien die thermische Energie ausgetauscht werden kann.

Während des Betriebs der Windkraftanlage 20 wird der Generator 11 von dem das Generatorkühlsystem 21 durchströmenden Wasser gekühlt. Das erwärmte Wasser wird der Rückkühleinheit 22 des Generatorkühlsystems 21 zugeführt, in der dem Wasser die thermische Energie entzogen wird, die es vom Generator 11 aufgenommen hat. Anschließend wird das Wasser wieder zum Generator 11 geleitet. Das Getriebe 10 wird durch das Öl des Getriebekühlsystems 23 gekühlt. Das erwärmte Öl wird der im Generator 11 angeordneten Rückkühleinheit 24 zugeführt, in der es die im Getriebe 10 aufgenommene thermische Energie an das Wasser des Generatorkühlsystems 21 überträgt. Daraufhin wird das Öl zurück zum Getriebe 10 geleitet.

Analog zu den Windkraftanlagen 1 und 15 der ersten beiden Ausführungsformen zeichnet sich die Windkraftanlage 20 dadurch aus, dass die Rückkühleinheit 24 des Getriebekühlsystems 23 in das Generatorkühlsystem 21 integriert ist, was wiederum mit den zuvor beschriebenen Vorteilen einhergeht.

Figur 4 zeigt eine Windkraftanlage 25 gemäß einer vierten Ausführungsform der vorliegenden Erfindung, deren Aufbau wieder in großen Teilen der in Figur 1 dargestellten Windkraftanlage 1 entspricht, weshalb gleiche oder gleichartige Bauteile mit gleichen Bezugsziffern versehen sind und nachfolgend nicht erneut beschrieben werden. Das Generatorkühlsystem 26 der Windkraftanlage 25 wird mit Wasser betrieben und umfasst einen Wasser-Luft-Wärmetauscher, der derart ausgebildet und angeordnet ist, dass er während des bestimmungsgemäßen Betriebs der Windkraftanlage 25 thermische Energie von der im Inneren des Generators vorhandenen Luft an das Kühlfluid des Generatorkühlsystems 26 überträgt. Ferner umfasst das Generatorkühlsystem 26 eine Rückkühleinheit 28, in der dem Kühlfluid des Generatorkühlsystems 26 Wärme entzogen wird, die dann zumindest teilweise an die Umgebung abgegeben wird. Das Getriebekühlsystem 29 der Windkraftanlage 25 wird mit Öl als Kühlfluid betrieben und weist eine Rückkühleinheit 30 auf, bei der es sich vorliegend um einen Luft-Öl-Wärmetauscher handelt, der derart ausgebildet und angeordnet ist, dass er während des bestimmungsgemäßen Betriebs der Windkraftanlage 25 thermische Energie von dem Kühlfluid des Getriebekühlsystems 29 an die Innenluft des Generators 11 überträgt.

Während des Betriebs der Windkraftanlage 25 wird der Generator 11 von dem das Generatorkühlsystem 26 durchströmenden Wasser gekühlt, indem der Generatorinnenluft innerhalb des Wasser-Luft-Wärmetauschers 27 Wärme entzogen wird, die auf das Kühlfluid des Generatorkühlsystems 26 übertragen wird. Das erwärmte Wasser wird der Rückkühleinheit 28 zugeführt, in der die Wärme wieder entzogen und zumindest teilweise an die Umgebung abgegeben wird. Anschließend wird das abgekühlte Wasser zurück zum Generator 11 geleitet.

Das Getriebe wird über das Öl gekühlt, welches das Getriebekühlsystem 29 durchströmt. Das erwärmte Öl wird der Rückkühleinheit 30 zugeführt, in der das Öl thermische Energie an die durch den Wasser-Luft-Wärmetauscher 27 des Generatorkühlsystems 26 gekühlte Innenluft des Generators 11 überträgt. Das abgekühlte Öl wird anschließend wieder zurück zum Getriebe 10 geleitet.

Analog zu den zuvor beschriebenen Ausführungsformen zeichnet sich auch die Windkraftanlage 25 dadurch aus, dass die Rückkühleinheit 30 des Getriebekühlsystems 29 in das Generatorkühlsystem 26 integriert ist, wodurch die bereits beschriebenen Vorteile erzielt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Windkraftanlage (1,15,20,25) mit einem Generator (11), der ein mit einem Kühlfluid betriebenes Generatorkühlsystem (12,16,21,26) aufweist, und einem Getriebe (10), das mit einem eine Rückkühleinheit (14,19,24,30) aufweisenden und mit einem Kühlfluid betriebenen Getriebekühlsystem (13,18,23,29) versehen ist,
**dadurch gekennzeichnet, dass** die Rückkühleinheit (14,19,24, 30) des Getriebekühlsystems (13,18,23,29) derart ausgebildet und angeordnet ist, dass sie während des bestimmungsgemäßen Betriebs der Windkraftanlage (1,15,20,25) thermische Energie von dem Kühlfluid des Getriebekühlsystems (13,18,23,29) an im Innern des Generators (11) vorhandene Luft oder an das Kühlfluid des Generatorkühlsystems (12,16,21,26) überträgt.

2. Windkraftanlage (1) nach Anspruch 1,
**dadurch gekennzeichnet, dass** das Kühlfluid des Generatorkühlsystems (12) Luft und das Kühlfluid des Getriebekühlsystems (13) Öl ist, und dass als Rückkühleinheit (14) des Getriebekühlsystems (13) ein Luft-Öl-Wärmetauscher in das Generatorkühlsystem (12) integriert ist, der derart ausgebildet und angeordnet ist, dass er während des bestimmungsgemäßen Betriebs der Windkraftanlage (1) thermische Energie von dem Kühlfluid des Getriebekühlsystems (13) an das Kühlfluid des Generatorkühlsystems (12) überträgt.

3. Windkraftanlage (15) nach Anspruch 1,
**dadurch gekennzeichnet, dass** das Kühlfluid des Generatorkühlsystems (16) Luft und das Kühlfluid des Getriebekühlsystems (18) Öl ist, dass das Generatorkühlsystem (16) einen Luft-Luft-Wärmetauscher (17) aufweist, der derart ausgebildet und angeordnet ist, dass er während des bestimmungsgemäßen Betriebs der Windkraftanlage (15) thermische Energie von der im Innern des Generators (11) vorhandenen Luft an das Kühlfluid des Generatorkühlsystems (16) überträgt, und dass als Rückkühleinheit (19) des Getriebekühlsystems (18) ein Luft-Öl-Wärmetauscher in den Generator (11) integriert ist, der derart ausgebildet und angeordnet ist, dass er während des bestimmungsgemäßen Betriebs der Windkraftanlage (15) thermische Energie von dem Kühlfluid des Getriebekühlsystems (18) an die durch den Luft-Luft-Wärmetauscher (17) gekühlte Innenluft des Generators (11) überträgt.

4. Windkraftanlage (20) nach Anspruch 1,
**dadurch gekennzeichnet, dass** das Kühlfluid des Getriebekühlsystems (23) Öl und das Kühlfluid des Generatorkühlsystems (21) Wasser ist, und dass als Rückkühleinheit (24) des Getriebekühlsystems (23) ein Wasser-Öl-Wärmetauscher in das Generatorkühlsystem (21) integriert ist, der derart ausgebildet und angeordnet ist, dass er während des bestimmungsgemäßen Betriebs der Windkraftanlage (20) thermische Energie von dem Kühlfluid des Getriebekühlsystems (23) an das Kühlfluid des Generatorkühlsystems (21) überträgt.

5. Windkraftanlage (25) nach Anspruch 1,
**dadurch gekennzeichnet, dass** das Kühlfluid des Generatorkühlsystems (26) Wasser und das Kühlfluid des Getriebekühlsystems (29) Öl ist, dass das Generatorkühlsystem (26) einen Wasser-Luft-Wärmetauscher (27) aufweist, der derart ausgebildet und angeordnet ist, dass er während des bestimmungsgemäßen Betriebs der Windkraftanlage (25) thermische Energie von dem Kühlfluid des Generatorkühlsystems (26) an die im Innern des Generators (11) vorhandene Luft überträgt, und dass als Rückkühleinheit (30) des Getriebekühlsystems (29) ein Luft-Öl-Wärmetauscher in den Generator (11) integriert ist, der derart ausgebildet und angeordnet ist, dass er während des bestimmungsgemäßen Betriebs der Windkraftanlage (25) thermische Energie von der durch den Wasser-Luft-Wärmetauscher (27) gekühlten Innenluft des Generators (11) an das Kühlfluid des Getriebekühlsystems (29) überträgt.
